# EUROPEAN PATENT SPECIFICATION

(11) **EP 4 590 161 B1**
(45) Date of publication and mention of the grant of the patent: **03.06.2026**
(21) Application number: 23769300.7
(22) Date of filing: 20.09.2023
(51) Int. Cl.: A47J 31/46, A47J 31/50, A47J 31/44

(54) **BEVERAGE DISPENSER**
GETRÄNKESPENDER
DISTRIBUTEUR DE BOISSONS

(30) Priority: 22.09.2022 EP 22197143
(43) Date of publication of application: 30.07.2025
(73) Proprietor: Société des Produits Nestlé S.A., 1800 Vevey (CH)
(72) Inventor: PUGLIESE, Alexandre, 1094 Paudex (CH); OBLIGER, Nicolas, 25170 Franey (FR); JARISCH, Christian, 1095 Lutry (CH); GUYON, Bertrand, 25300 Pontarlier (FR); PERENTES, Alexandre, 1036 Sullens (CH)
(74) Representative: Ducreux, Marie
(86) International application number: PCT/EP2023/075870
(87) International publication number: WO 2024/061941

(56) References cited:
- WO-A1-2019/075590
- US-A1- 2011 014 339
- US-A1- 2018 177 326
- US-A1- 2022 225 816
- US-B1- 6 681 594

## Description

### Field of the invention

The present invention relates to the preparation of cold coffee and cold beverages.

### Background of the invention

Numerous solutions exist for preparing cold coffee from a hot extracted coffee. Most of the solutions propose to cool the hot coffee in its path from the coffee preparation unit to the dispensing area and the drinking cup. This dispensing path can be placed in contact with a heat exchanger supplied with a cooling fluid presenting a low temperature. An integrated design of a coffee machine with a refrigeration unit is for example known from US 2011/014339 A1.

If the temperature of the cooling fluid is not low enough, the exchange of heat does not enable an important decrease of the temperature of the hot coffee during its dispensing and the dispensed coffee cannot reach a temperature that can really be felt as cold. This is usually compensated by the addition of ice which dilutes the coffee.

With a very cold cooling fluid (presenting a temperature largely inferior to 0°C), the heat exchange can be faster but this solution requires a coffee machine integrating a cold generation unit. Generally, a cold generation unit comprises a refrigeration circuit having a refrigerant circulating therein for generating cold and comprising a compressor, a condenser, an expansion means (expansion valve or capillarity tubes) and an evaporator for treating the refrigerant. These devices strongly increase the cost of the coffee machine and using a cold generation unit only for the heat exchanger of the hot coffee dispensing line is rarely implemented.

An object of the invention is to address the above existing problems.

### Summary of the invention

Objects of the invention are achieved by the beverage dispenser according to Claims 1 to 8.

### Brief description of the drawings

Specific embodiments of the invention are described further, by way of example, with reference to the following drawings in which :
- Figure 1 is a schematic view of a beverage dispenser according to the invention,
- Figure 2 is a schematic view of the coffee cooler,
- Figures 3A, 3B are isolated view of a cooling fluid container 4,
- Figure 3C is a schematic view of the cooling fluid container 4, the internal cooling fluid circuit and the cold generation unit,
- Figures 3D and 3E are section views according to plane AA and BB respectively of Figure 3B.
- Figure 4 illustrates a different architecture of the beverage dispenser according to the invention.

### Detailed description of exemplary embodiments

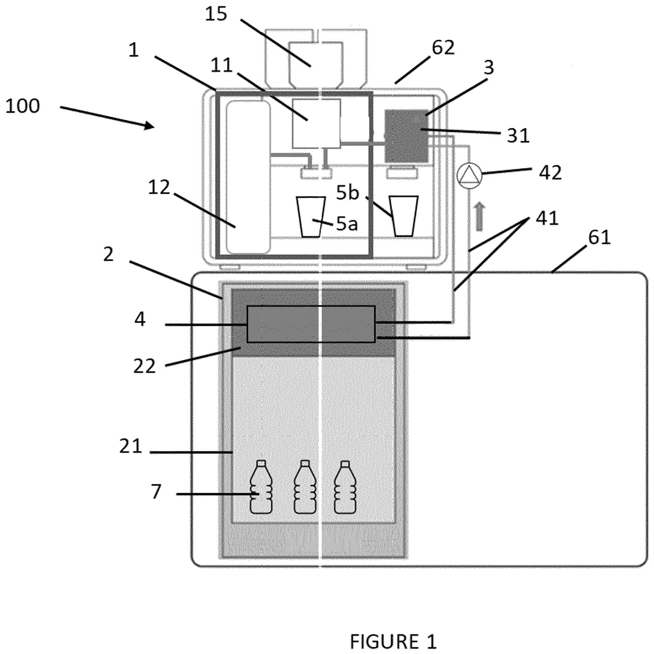

**Figure 1** illustrates a beverage dispenser 100 according to the invention. The dispenser is an assembly of different sub-units that are fluidically connected.

The first sub-unit is a coffee machine 1. This coffee machine is configured to produce hot coffee. preferably hot coffee is prepared by extraction of roast and ground coffee with hot water in a brewing unit 11, The machine can comprise a replenishable coffee beans container 15 and a grinder (not illustrated) to supply the brewing unit with a dose of roasted and ground coffee.

Alternatively, the coffee machine can prepare hot coffee from coffee capsules, the brewing unit being a capsule cage configured to open the capsule and extract coffee therefrom.

In a less preferred mode, coffee can be prepared from soluble coffee and the coffee machine comprises a mixing chamber to mix a dose of soluble coffee with hot water.

Prepared coffee is dispensed in a cup 5 at a dispensing area of the dispenser.

The coffee machine is configured to enable the addition of fresh milk to the prepared coffee. Accordingly, the coffee machine comprises a fresh milk tank 12 and means to dispense a dose of milk in the cup 5a at the dispensing area. This milk can be frothed during its dispensing. This milk tank is configured to store a certain amount of milk during the day and preferably for this reason is heat insulated. It is replenishable with cold fresh milk.

The second sub-unit of the beverage dispenser is a fridge 2. This fridge comprises a chilling compartment 21 that enables the storage of numerous fresh milk bottles. Accordingly, the milk tank 12 of the coffee machine can always be refilled with milk at the right cold temperature. The temperature of the chilling compartment is above 0°C, usually between 5 and 10°C.

In addition, the fridge comprises a freezing compartment 2 wherein the temperature is below 0°C, preferably below - 15°C.

The third sub-unit of the beverage dispenser is a coffee cooler 3.

This device is configured to cool hot coffee produced by the coffee machine. Accordingly, the coffee machine comprises a coffee outlet to dispense hot prepared coffee from the brewing unit 11 to the coffee cooler in place of dispensing in the cup 5a positioned below the brewing unit. The coffee cooler comprises a vessel 31 to receive and hold hot coffee dispensed from the coffee machine. The wall 31 of the vessel comprises a circulating path 32 for a cooling fluid. Consequently, this cooling device enables the cooling of the hot coffee by heat exchange with the cooling fluid through contact along the wall of the vessel.

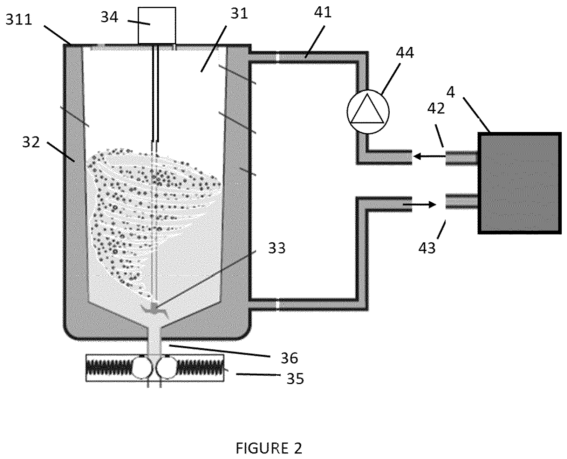

**Figure 2** illustrates one possible embodiment of the coffee cooler. The coffee cooler comprises a liquid mixing means, such as the illustrated whipper 33 actuated by a motor 34, to enable the circulation of coffee inside the vessel and improve the heat exchange along the wall 311 of the vessel.

A pinching valve 35 at the dispensing outlet 36 of the vessel enables a longer retention of the coffee inside the vessel until the desired cold temperature is reached.

The vessel presents a double wall configuration so that the cooling fluid is able to circulate inside the wall to exchange heat with the hot coffee agitated inside the vessel. The cooling fluid is provided through an external cooling fluid circuit 41 connected to a supply of cooling fluid. The supply of cooling fluid is a cooling fluid container 4 that is part of the circuit. Inside this circuit 41, the circulation is enabled by a pump 44. This cooling fluid container 4 provides an important volume of cooling fluid which enables the cooling of successive extracted coffee guaranteeing a high throughput for cold coffees.

In the beverage dispenser, the cooling fluid container 4 is positioned inside the freezer compartment 22 of the fridge. Accordingly, the cold generation unit of the fridge can be used simultaneously to chill the milk bottles and to cool down the cooling fluid of the coffee cooler. There is no need for an additional cold generation unit dedicated for the coffee cooler sub-unit. The use of the cold generation unit of the fridge is shared between the different devices of the beverage dispenser and the cost is optimised.

The container of cooling fluid provides an important quantity of cooling fluid at low temperature enabling the rapid cooling of a hot coffee or the successive cooling operations of several hot coffees or the cooling of several coffees simultaneously.

Preferably, the different sub-units 1, 2, 3 are enclosed in housings 61, 62.

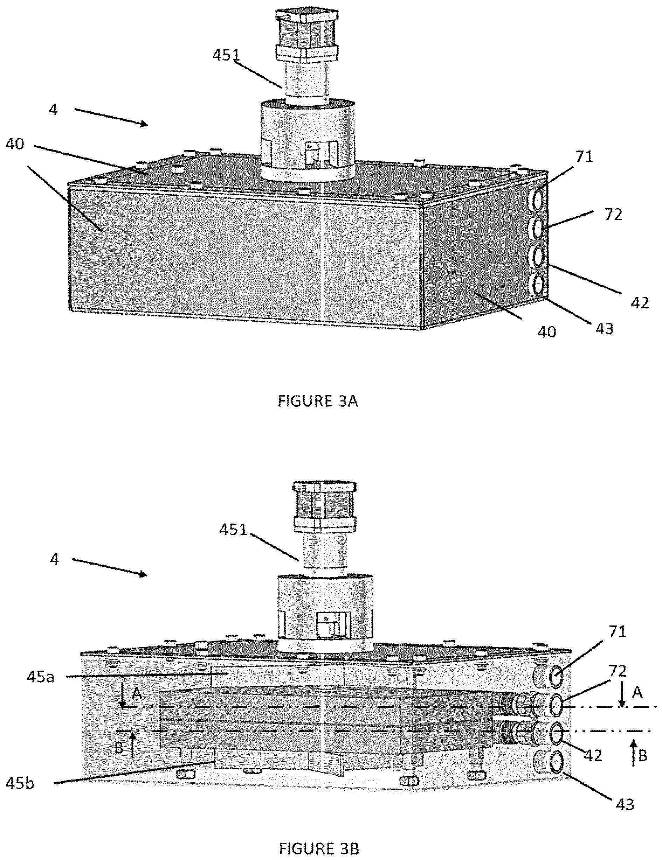

**Figure 3A** is an isolated view of a particular embodiment of the cooling fluid container 4. The container comprises several walls 40 defining the internal volume of the container. Several inlets and outlets 42, 43, 72, 73 are provided in one wall or positioned in different walls depending on the design of the container and the architecture of the beverage dispenser. One wall is crossed by a rotating shaft 451. As illustrated in **Figure 3B****,** wherein the walls were made transparent, this shaft 451 cooperates with two agitators 45a, 45b designed to agitate the cooling fluid inside the container.

Two of the inlets and outlets are connected to the external cooling fluid circuit 41 of the coffee cooler. One is the fridge external outlet 42 that supplies the external cooling fluid circuit 41 and the coffee cooler 3 with the cooling fluid at low temperature and the other is the fridge external inlet 43 through which the heated cooling fluid flows back to the container 4.

As the container 4 is positioned in the freezing compartment, openings are provided in the housing of the fridge.

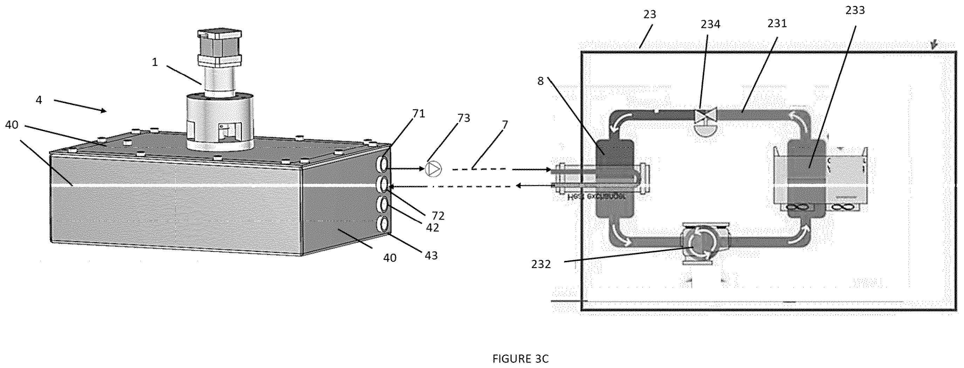

The two other inlets and outlets are connected to an internal cooling fluid circuit 7 schematically illustrated in **Figure 3C****.** This internal cooling fluid circuit is configured to circulate the cooling fluid between the cooling fluid container 4 and a heat exchanger 8, wherein the temperature of the cooling fluid is decreased. The cooling fluid is pumped by a pump 73 from the fridge internal outlet 71 to the heat exchanger 8 and then the colder fluid is circulated back to the container through the fridge internal inlet 72.

This heat exchanger 8 is configured to exchange heat between the cooling fluid and the refrigerant of the cold generation unit 23 of the fridge. In a well-known manner, the cold generation unit 23 of the fridge comprises a refrigeration circuit 231 having a refrigerant circulating therein and comprising at least :
- a compressor 232,
- a condenser 233,
- an expansion means 234.

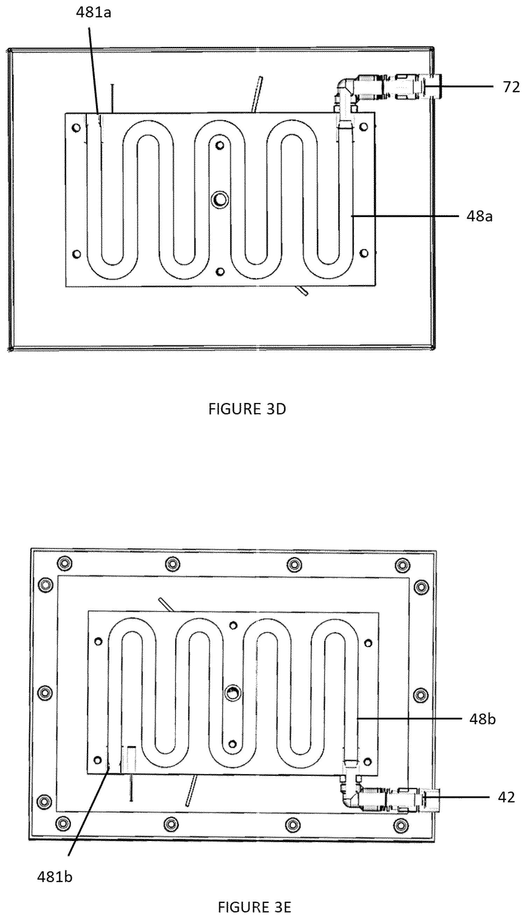

**Figure 3D** is the section view of Figure 3B according to plane AA. It makes apparent that the container 4 comprises a first internal channel 48a to control the path of the cold cooling fluid flowing back from the internal cooling fluid circuit 7 and entering at the fridge internal inlet 72. In a similar way, **Figure 3E** is the section view of Figure 3B according to plane BB. It makes apparent that the container 4 comprises a second internal channel 48b to control the path of the cooling fluid flowing to the external circuit 41 to the coffee cooler 3 and exiting at the fridge external outlet 42.

These two channels 48a, 48b are positioned one along the other inside the cooling container in order to optimise the heat exchange between these two fluids that present an important gradient of temperature.

The ends 481a, 481b of both channels emerge in the common free internal volume of the container, where the cooling fluid flowing from the different circuits is homogenised. The agitators participate to the homogenisation of the temperature of the cooling fluid inside the container.

Preferably, the cooling liquid is propylene glycol. Such a fluid can reach a temperature of - 25°C and rapidly cool the hot coffee through the wall of the coffee cooler.

As the viscosity of such a fluid can vary with temperature, it is preferable to use of a storing container that comprises agitators and internal channels to facilitate the homogenisation of its temperature.

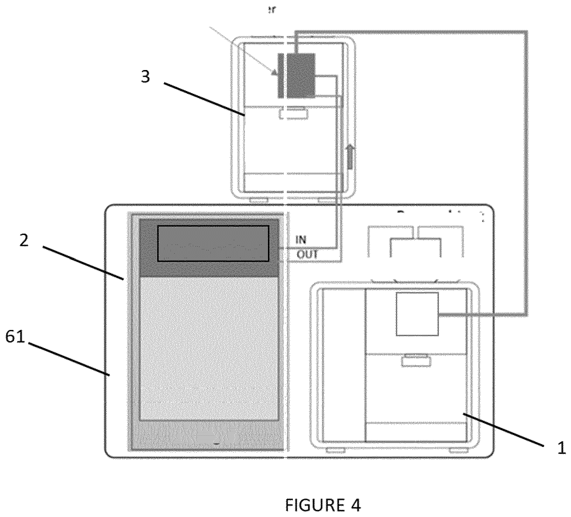

**Figure 4** illustrates a different architecture of the beverage dispenser according to the invention wherein the fridge and the coffee machine are positioned in the same housing and the coffee cooler is positioned above.

Although the invention has been described with reference to the above illustrated embodiments, it will be appreciated that the invention as claimed is not limited in any way by these illustrated embodiments.

Variations and modifications may be made without departing from the scope of the invention as defined in the claims.

As used in this specification, the words "comprises", "comprising", and similar words, are not to be interpreted in an exclusive or exhaustive sense. In other words, they are intended to mean "including, but not limited to".

### List of references in the drawings :

| | |
|---|---|
| beverage dispenser | 100 |
| coffee machine | 1 |
| coffee preparation unit | 11 |
| milk tank | 12 |
| dispensing outlet to cup | 13a, 13b |
| connection to coffee cooler | 14 |
| coffee beans hopper | 15 |
| fridge | 2 |
| chilling compartment | 21 |
| freezer compartment | 22 |
| cold generation unit | 23 |
| refrigeration circuit | 231 |
| compressor | 232 |
| condenser | 233 |
| expansion means | 234 |
| coffee cooler | 3 |
| vessel | 31 |
| wall | 311 |
| circulating path | 32 |
| whipper | 33 |
| motor | 34 |
| pinching valve | 35 |
| dispensing outlet | 36 |
| cooling fluid container | 4 |
| external circuit | 41 |
| fridge external outlet | 42 |
| fridge external inlet | 43 |
| pump | 44 |
| agitator | 45a, 45b |
| shaft | 46 |
| internal channel | 48a, 48b |
| channel outlet | 481a, 481b |
| cup | 5a, 5b |
| housing | 61, 62 |
| internal cooling fluid circuit | 7 |
| fridge internal outlet | 71 |
| fridge internal inlet | 72 |
| pump | 73 |
| heat exchanger | 8 |

## Claims

1. Beverage dispenser (100) comprising :
- a coffee machine (1) to produce hot coffee and hot coffee combined with milk, said coffee machine comprising a milk tank (12), said milk tank being replenishable with milk, preferably cold milk,
- a fridge (2) comprising :
. a chilling compartment (21) to store and chill milk containers at a temperature above 0°C, usually between 5 and 10 °C and
. a freezer compartment (22) able to hold temperature below 0°C, preferably below - 15°C,
- a coffee cooler (3) to cool hot coffee produced by the coffee machine, said coffee cooler comprising a vessel (31) to hold coffee dispensed from the coffee machine and the wall (311) of said vessel comprising a circulating path (32) for a cooling fluid,
wherein the freezer compartment (22) of the fridge comprises a cooling fluid container (4) for storing and cooling said cooling fluid, and
wherein the beverage dispenser comprises an external cooling fluid circuit (41), said external cooling fluid circuit being configured to circulate the cooling fluid between said cooling fluid container and the circulating path of the coffee cooler.

2. Beverage dispenser according to Claim 1, wherein the container (4) for storing and cooling the cooling fluid comprises a fridge external inlet (43) and a fridge external outlet (42) for the cooling fluid and the cooling fluid circuit comprises a pump (44) to circulate the cooling fluid from said outlet to the circulating path (32) of the coffee cooler and back to the inlet of the container.

3. Beverage dispenser according to Claim 1 or 2, wherein the cooling liquid is propylene glycol.

4. Beverage dispenser according to any one of the precedent claims, wherein the container (4) for storing and cooling the cooling fluid comprises an agitator (45a, 45b)

5. Beverage dispenser according to any one of the precedent claims, wherein :
- the fridge comprises at least one cold generation unit (23), said cold generation unit comprising a refrigeration circuit (231) having a refrigerant circulating therein and comprising a compressor (232), a condenser (233), an expansion means (234) for treating the refrigerant, and
- the beverage dispenser comprises an internal cooling fluid circuit (7), said internal cooling fluid circuit being configured to circulate the cooling fluid between the cooling fluid container (4) and a heat exchanger (8), said heat exchanger exchanging heat between the cooling fluid and the refrigerant of the cold generation unit (23) of the fridge.

6. Beverage dispenser according to the precedent claim, wherein the container (4) for storing and cooling the cooling fluid comprises a fridge internal inlet (72) and a fridge internal outlet (73) for the cooling fluid and the internal cooling fluid circuit comprises a pump (73) to circulate the cooling fluid from said fridge outlet to the heat exchanger (8) of the freezer and back to the fridge internal inlet (72) of the container.

7. Beverage dispenser according to any one of the precedent claims, wherein the container for storing and cooling the cooling fluid comprises internal channels (48), said channels being configured to control the circulation of the different flows of cooling fluid entering and/or exiting the container.

8. Beverage dispenser according to any one of the precedent claims, wherein the container for storing and cooling the cooling fluid comprises an internal heat exchanger (48) configured to exchange heat between the cooling fluid entering the container from the internal cooling fluid circuit and the cooling fluid exiting the container to the external cooling fluid circuit.

## Patentansprüche

1. Getränkespender (100), umfassend:
- eine Kaffeemaschine (1), um heißen Kaffee und heißen Kaffee kombiniert mit Milch herzustellen, die Kaffeemaschine umfassend einen Milchtank (12), wobei der Milchtank mit Milch, vorzugsweise kalter Milch, auffüllbar ist,
- einen Kühlschrank (2), umfassend:
. ein Kühlfach (21), um Milchbehälter bei einer Temperatur über 0 °C, üblicherweise zwischen 5 und 10 °C zu lagern und zu kühlen und
. ein Gefrierfach (22), das in der Lage ist, Temperaturen unter 0 °C zu halten, vorzugsweise unter -15 °C,
- einen Kaffeekühler (3), um heißen Kaffee, der durch die Kaffeemaschine hergestellt wird, zu kühlen, der Kaffeekühler umfassend ein Gefäß (31), um Kaffee, der aus der Kaffeemaschine abgegeben wird, zu halten, und die Wand (311) des Gefäßes umfassend einen Zirkulationsweg (32) für eine Kühlflüssigkeit,
wobei das Gefrierfach (22) des Kühlschranks einen Kühlflüssigkeitsbehälter (4) zum Lagern und Kühlen der Kühlflüssigkeit umfasst und
wobei der Getränkespender einen externen Kühlflüssigkeitskreislauf (41) umfasst, wobei der externe Kühlflüssigkeitskreislauf konfiguriert ist, um die Kühlflüssigkeit zwischen dem Kühlflüssigkeitsbehälter und dem Zirkulationsweg des Kaffeekühlers zirkulieren zu lassen.

2. Getränkespender nach Anspruch 1, wobei der Behälter (4) zum Lagern und Kühlen der Kühlflüssigkeit einen kühlschrankexternen Einlass (43) und einen kühlschrankexternen Auslass (42) für die Kühlflüssigkeit umfasst und der Kühlflüssigkeitskreislauf eine Pumpe (44) umfasst, um die Kühlflüssigkeit von dem Auslass zu dem Zirkulationsweg (32) des Kaffeekühlers und zurück zu dem Einlass des Behälters zirkulieren zu lassen.

3. Getränkespender nach Anspruch 1 oder 2, wobei die Kühlflüssigkeit Propylenglykol ist.

4. Getränkespender nach einem der vorstehenden Ansprüche, wobei der Behälter (4) zum Lagern und Kühlen der Kühlflüssigkeit einen Rührer (45a, 45b) umfasst

5. Getränkespender nach einem der vorstehenden Ansprüche, wobei:
- der Kühlschrank mindestens eine Kälteerzeugungseinheit (23) umfasst, die Kälteerzeugungseinheit umfassend einen Kältekreislauf (231), in dem ein Kältemittel zirkuliert wird, und umfassend einen Kompressor (232), einen Kondensator (233), ein Expansionsmittel (234) zum Behandeln des Kältemittels und
- der Getränkespender einen internen Kühlflüssigkeitskreislauf (7) umfasst, wobei der interne Kühlflüssigkeitskreislauf konfiguriert ist, um die Kühlflüssigkeit zwischen dem Kühlflüssigkeitsbehälter (4) und einem Wärmetauscher (8) zirkulieren zu lassen, wobei der Wärmetauscher Wärme zwischen der Kühlflüssigkeit und dem Kältemittel der Kälteerzeugungseinheit (23) des Kühlschranks austauscht.

6. Getränkespender nach dem vorstehenden Anspruch, wobei der Behälter (4) zum Lagern und Kühlen der Kühlflüssigkeit einen kühlschrankinternen Einlass (72) und einen kühlschrankinternen Auslass (73) für die Kühlflüssigkeit umfasst und der interne Kühlflüssigkeitskreislauf eine Pumpe (73) umfasst, um die Kühlflüssigkeit von dem Kühlschrankauslass zu dem Wärmetauscher (8) des Gefriergeräts und zurück zu dem kühlschrankinternen Einlass (72) des Behälters zirkulieren zu lassen.

7. Getränkespender nach einem der vorstehenden Ansprüche, wobei der Behälter zum Lagern und Kühlen der Kühlflüssigkeit interne Kanäle (48) umfasst, wobei die Kanäle konfiguriert sind, um die Zirkulation der verschiedenen Ströme von Kühlflüssigkeit, die in den Behälter eintreten und/oder aus dem Behälter austreten, zu steuern.

8. Getränkespender nach einem der vorstehenden Ansprüche, wobei der Behälter zum Lagern und Kühlen der Kühlflüssigkeit einen internen Wärmetauscher (48) umfasst, der konfiguriert ist, um Wärme zwischen der Kühlflüssigkeit, die in den Behälter aus dem internen Kühlflüssigkeitskreislauf eintritt, und der Kühlflüssigkeit, die aus dem Behälter zu dem externen Kühlflüssigkeitskreislauf austritt, auszutauschen.

## Revendications

1. Distributeur de boissons (100) comprenant :
- une machine à café (1) pour produire du café chaud et du café chaud combiné avec du lait, ladite machine à café comprenant un réservoir à lait (12), ledit réservoir à lait pouvant être réapprovisionné en lait, de préférence en lait froid,
- un réfrigérateur (2) comprenant :
. un compartiment de réfrigération (21) pour stocker et réfrigérer des récipients de lait à une température supérieure à 0 °C, habituellement entre 5 et 10 °C, et
. un compartiment congélateur (22) capable de maintenir une température inférieure à 0 °C, de préférence inférieure à -15 °C,
- un refroidisseur de café (3) pour refroidir le café chaud produit par la machine à café, ledit refroidisseur de café comprenant une cuve (31) pour contenir le café distribué par la machine à café et la paroi (311) de ladite cuve comprenant un trajet de circulation (32) pour un fluide de refroidissement,
dans lequel le compartiment congélateur (22) du réfrigérateur comprend un récipient de fluide de refroidissement (4) pour stocker et refroidir ledit fluide de refroidissement, et
dans lequel le distributeur de boissons comprend un circuit externe de fluide de refroidissement (41), ledit circuit externe de fluide de refroidissement étant conçu pour faire circuler le fluide de refroidissement entre ledit récipient de fluide de refroidissement et le trajet de circulation du refroidisseur de café.

2. Distributeur de boissons selon la revendication 1, dans lequel le récipient (4) permettant de stocker et de refroidir le fluide de refroidissement comprend une entrée externe de réfrigérateur (43) et une sortie externe de réfrigérateur (42) pour le fluide de refroidissement et le circuit de fluide de refroidissement comprend une pompe (44) pour faire circuler le fluide de refroidissement depuis ladite sortie vers le trajet de circulation (32) du refroidisseur de café et de retour vers l'entrée du récipient.

3. Distributeur de boissons selon la revendication 1 ou 2, dans lequel le liquide de refroidissement est du propylène glycol.

4. Distributeur de boissons selon l'une quelconque des revendications précédentes, dans lequel le récipient (4) permettant de stocker et de refroidir le fluide de refroidissement comprend un agitateur (45a, 45b)

5. Distributeur de boissons selon l'une quelconque des revendications précédentes, dans lequel :
- le réfrigérateur comprend au moins une unité de production de froid (23), ladite unité de production de froid comprenant un circuit de réfrigération (231) ayant un fluide frigorigène circulant dans celui-ci et comprenant un compresseur (232), un condenseur (233), un moyen de détente (234) pour traiter le fluide frigorigène, et
- le distributeur de boissons comprend un circuit interne de fluide de refroidissement (7), ledit circuit interne de fluide de refroidissement étant conçu pour faire circuler le fluide de refroidissement entre le récipient de fluide de refroidissement (4) et un échangeur de chaleur (8), ledit échangeur de chaleur échangeant de la chaleur entre le fluide de refroidissement et le fluide frigorigène de l'unité de génération de froid (23) du réfrigérateur.

6. Distributeur de boissons selon la revendication précédente, dans lequel le récipient (4) permettant de stocker et de refroidir le fluide de refroidissement comprend une entrée interne de réfrigérateur (72) et une sortie interne de réfrigérateur (73) pour le fluide de refroidissement et le circuit interne de fluide de refroidissement comprend une pompe (73) pour faire circuler le fluide de refroidissement depuis ladite sortie de réfrigérateur vers l'échangeur de chaleur (8) du congélateur et de retour vers l'entrée interne de réfrigérateur (72) du récipient.

7. Distributeur de boissons selon l'une quelconque des revendications précédentes, dans lequel le récipient permettant de stocker et de refroidir le fluide de refroidissement comprend des canaux internes (48), lesdits canaux étant conçus pour réguler la circulation des différents flux de fluide de refroidissement entrant dans et/ou sortant du récipient.

8. Distributeur de boissons selon l'une quelconque des revendications précédentes, dans lequel le récipient permettant de stocker et de refroidir le fluide de refroidissement comprend un échangeur de chaleur interne (48) conçu pour échanger de la chaleur entre le fluide de refroidissement entrant dans le récipient à partir du circuit interne de fluide de refroidissement et le fluide de refroidissement sortant du récipient vers le circuit externe de fluide de refroidissement.
